# EUROPEAN PATENT SPECIFICATION

(11) **EP 3 770 033 B1**
(45) Date of publication and mention of the grant of the patent: **06.04.2022**
(21) Application number: 19187720.8
(22) Date of filing: 23.07.2019
(51) Int. Cl.: B60T 15/04, B60T 17/22

(54) **APPARATUS AND METHOD FOR DETERMINING A STATUS OF THE TRAILER BRAKE**
VORRICHTUNG UND VERFAHREN ZUR ERMITTLUNG EINES ZUSTANDES EINER ANHÄNGERBREMSE
APPAREIL ET PROCÉDÉ PERMETTANT DE DÉTERMINER UN ÉTAT D'UN FREIN DE REMORQUE

(43) Date of publication of application: 27.01.2021
(73) Proprietor: KNORR-BREMSE Systeme für Nutzfahrzeuge GmbH, 80809 München (DE)
(72) Inventor: UDVARDY, Oliver, 1118 Budapest (HU)

(56) References cited:
- EP-A1- 2 998 177
- WO-A1-2019/034295
- WO-A2-2009/152982
- DE-A1-102008 048 207
- DE-A1-102010 021 911
- DE-A1-102016 117 784

## Description

The present invention relates to an apparatus and a method for determining a status of controlling of a trailer brake by a parking brake system of the towing vehicle and, in particular, to a method for detecting a controllability of a trailer brake and possible failures of the controllability. An example of a tractor-trailer brake control arrangement is disclosed in prior art document WO 2019/034295 A1.

A parking brake control unit in commercial vehicles controls parking brake actuators (e.g. valves) and is connected to a control unit for the trailer. Therefore, the trailer brakes can be controlled also with the parking brake system of the towing vehicle. To ensure the usage of the parking brake system as a secondary braking system, there is a demand of guaranteeing a simultaneous gradual control of the tractor brakes and the trailer brakes. Any failure in the trailer control should be reported to the driver or a warning should be sent to an autonomous vehicle controller or any other traffic participants prior to any secondary braking. This will avoid the risk of an increased braking distance or any possible loss of stability.

Moreover, in case of certain applications trailer braking is only demanded by parking brake during secondary braking. This function may be implemented using a valve unit with solenoids. Therefore, it is important to ensure the correct operation of this valve unit to maintain the safety of the vehicle combination and to avoid a longer braking distances and/or jack-knife situation.

Therefore, there is a demand for a mechanism that can ensure or at least monitor the controlling of the trailer control unit, and that is able to issue a warning if a failure or at least a malfunctioning of the trailer brake control has been detected.

At least some of these issues are overcome by an apparatus according to claim 1 or a method according to claim 10. The dependent claims refer to further advantageous realizations of the subject matter of the independent claims.

The present invention relates to an apparatus for determining a status of controlling (or controllability of) a trailer brake by a parking brake system. The parking brake system comprises a parking brake port, a trailer control module port, a sensor configured to measure a pressure at the parking brake port, and a valve arrangement configured to connect or disconnect the trailer control module port and the parking brake port to allow exhausting of the trailer control module port while the parking brake port is exhausted. The apparatus includes a control unit configured to control the valve arrangement to exhaust the trailer control module port by connecting the trailer control module port with an exhausted parking brake port, and to detect a temporary pressure increase sensed by the sensor and, based on a result, to determine the status of controlling as successful or not (a failure).

The status may indicate the controllability of the valve arrangement or its correct functioning. Since the valve arrangement may include one or more solenoids (e.g. at least two 2/2 or a 3/2 solenoid) embodiments are able to test these valves and thus a correct operation of the secondary braking, where the parking brake system is used for braking the trailer and the tractor. For this, the parking brake port may be connected to one or more spring brake cylinders used for the parking brake. The temporary pressure increase may only be very short (e.g. fraction of a second) and depends on the system (e.g. how fast a line can be exhausted via an exhaust port).

Optionally, the control unit is further configured to repeat inflating/exhausting the trailer control module port and the detection of the status to enable a robust monitoring of a correct functioning of the parking brake system. The repetitions can be performed with a defined delay or for predefined number of cycles (e.g. 2, 3, ..., 5, ..., 10, ....) to provide a reliable result.

Optionally, the control unit is further configured to detect the status by comparing pressure values from the sensor with at least one threshold value and to provide a warning if at least one of the threshold values will not be exceeded (e.g. when the pressure sensor does not indicate any pressure fluctuation). Multiple thresholds may be used to determine a degree of failure. The threshold(s) should large enough to detect an actual failure.

Optionally, the control unit is further configured to control the valve arrangement to inflate the trailer control module port and, after a predetermined time (e.g. 1s, 2s, ..., 5s, ...), to exhaust the trailer control module port while detecting the status of controlling by monitoring pressure values sensed by the pressure sensor.

Optionally, the control unit is further configured to perform the steps of inflating the trailer control module port followed by exhausting the trailer control module port and of detecting the status for multiples trials while counting a number trials and a number of successful tests.

Optionally, the control unit is further configured to provide an indication of no failures for the parking brake system (and thus indicating a correct operation), if the number of trials has reached a defined limit and if a predefined (or a sufficient) number of trials were successful. Otherwise, if a certain number (at least one, two, three, ...) of tests indicate a failure, the control unit is configured to issue a failure indication. The failure indication may include a warning, optionally with the number of failures. The defined limit can be any number (e.g. 2, 3, ..., 5, ..., 10, ....).

Optionally, the control unit is further configured to check whether an execution flag is set in an actual ignition cycle, and to execute the control of the valve arrangement and the detection of the status only when no execution flag is set.

Further embodiments relate to a parking brake system with the apparatus as defined before.

Further embodiments relate a vehicle, in particular to a commercial vehicle, with the parking brake system as defined before.

Further embodiments relate to a method for determining a status of controlling a trailer brake by a parking brake system. The parking brake system comprises a parking brake port, a trailer control module port, a sensor configured to measure a pressure at the parking brake port, and a valve arrangement configured to connect or disconnect the trailer control module port and the parking brake port to allow exhausting of the trailer control module port while the parking brake port is exhausted. The method includes:
- controlling the valve arrangement to exhaust the trailer control module port by connecting the trailer control module port with an exhausted parking brake port;
- detecting a temporary pressure increase sensed by the sensor; and
- based on a detection result, determining the status of controlling as successful or not.

This method may also be implemented in software or on a computer program product (as stored instructions). Embodiment of the present invention may, in particular, relate to an electronic control unit (ECU) configured by software to perform the method (e.g. by software modules in an ECU). Therefore, embodiment relate also to a computer program having a program code for performing the method, when the computer program is executed on a processor.

Embodiments solve at least some problems of the conventional systems by using a sensor that provides information about the pressure in a control line of the spring brake system for monitoring the controllability. This sensor is part of the electronic park brake system, but not (necessarily) of the apparatus according to embodiments. Since the pneumatic control line (connected to the trailer control module port) can be connected to the control line for the spring brakes (at the parking brake port), the parking brake can be applied without demanding a trailer service brake. Embodiments use this operation to check or monitor the controllability of the parking brake system.

Some examples of the systems and/or methods will be described in the following by way of examples only, and with respect to the accompanying figures, in which:
- Fig. 1: depicts an apparatus according to an embodiment of the present invention which is suitable for determining the controllability of a parking brake system;
- Fig. 2: depicts further details of such a system that is monitored by a control unit according to embodiments of the present invention;
- Fig. 3: depicts a system overview of the parking brake system implemented, for example, in a commercial vehicle; and
- Fig. 4: depicts a flow chart of a method according to embodiments for determining a status of controlling a trailer brake by using a parking brake system.

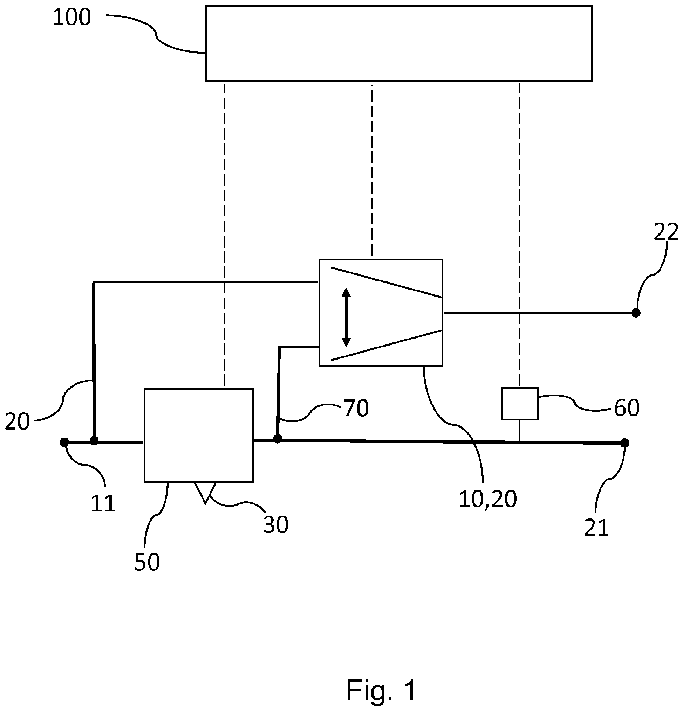

**Fig. 1** depicts an apparatus which is configured to determine the status of controlling a parking brake system. This controllability check relates e.g. to a verification of the ability of braking of a trailer using the parking brake. The depicted parking brake system includes a trailer control module port 22, a parking brake port 21, a sensor 60, and a valve arrangement 10, 20. The sensor 60 is configured to measure a pressure at the parking brake port 21 and the valve arrangement 10, 20 is configured to connect and/or disconnect the trailer control module port 22 and the parking brake port 21. The parking brake system includes a port/line 11 for a pressure supply (not shown) which is connected to the valve unit 10, 20. The parking brake system includes further a relay valve unit 50 which is configured to control an air volume or pressure supplied to the trailer control module port 22 and/or to the parking brake port 21.

The parking brake system is controlled by a control unit 100 which receives sensor signals from the sensor 60 indicating the pressure at the parking brake port 21. The control unit 100 controls further the valve arrangement 10, 20 and the relay valve 50 to enable the desired functions. For example, the control unit 100 may control the valve arrangement 10, 20 to connect, via a connection line 70, the trailer control module port 22 with the pressure supply 11 or, alternatively, to connect the trailer control module port 22 with the parking brake port 21. Likewise, the relay valve unit 50 is controlled by the control unit 100 to modulate the air volume or the pressure at the parking brake port 21 or to exhaust the parking brake port 21 and/or the trailer control module port 22 (if both ports are connected).

The trailer control module port 22 may be a pneumatic control line connecting the valve arrangement 10, 20 with a trailer control module (not shown). Similarly, the parking brake port 21 may be formed as a control line connecting an outlet of the relay valve 50 with one or more spring brakes to enable the parking brake of the towing vehicle (tractor).

The monitoring of the controllability of the braking system and thus the determination of the status may be performed as follows. The control unit 100 may demand to actuate the trailer braking system by deliberately inflating the pneumatic control line and thus the trailer control module port 22. Subsequently, the control unit 100 can control the valve arrangement 10, 20 to exhaust the trailer control module port 22 via the connection line 70 and an exhaust port 30 (e.g. in the relay valve 50).

The air volume exhausted via the connection line 70 will cause a slight pressure increase at the pressure sensor 60 (i.e. at the portion before the exhaust port 30). Embodiments detect this temporal pressure change by using the sensor 60 to detect a synchronous pressure change with the inflation and the subsequent deflation of the trailer control line.

According to further embodiments, this procedure is repeated in sequences to enable a continuous monitoring of the controllability of the brake system. If the trailer control line deflates and the measured pressure does not increase as expected, a warning is issued indicating an increased risk of not adequate brake possibilities of the trailer, e.g. during the secondary braking that relies on the parking brake system.

It is understood that embodiments may be implemented (e.g. by software) as a module inside the control unit 100. However, further embodiments relate also to the whole system as depicted in the Fig. 1, i.e. include the parking brake system or part thereof.

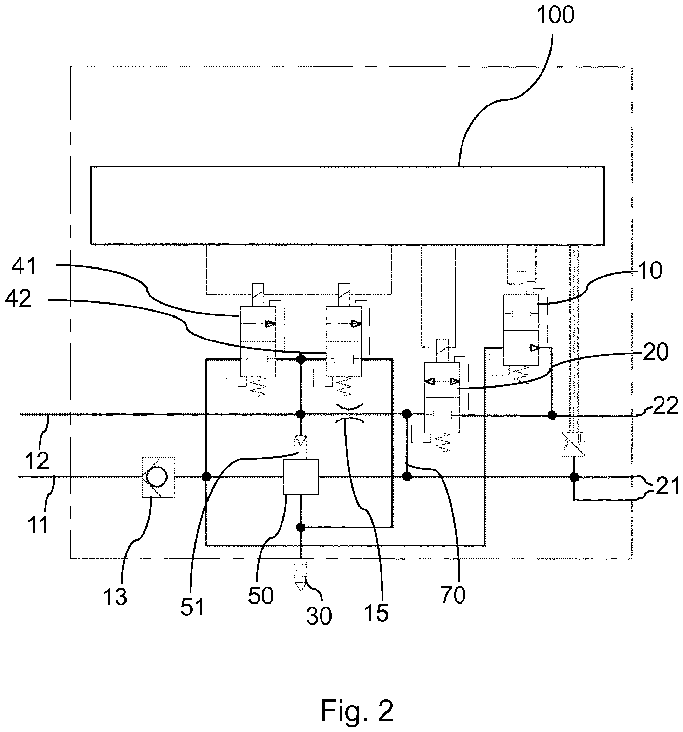

Fig. 2 depicts further details of such a system that is monitored by a control unit 100 according to embodiments of the present invention. The valve arrangement 10, 20 in this system includes a first solenoid valve 10 and a second solenoid valve 20, and the parking brake port 21 includes two ports, e.g. for two different spring brakes (not shown). The first solenoid 10 is configured to open or close a connection between the trailer control module port 22 and the pressure supply 11. The second solenoid 20 is configured to open or close the connection 70 between the trailer control module port 22 and the parking brake port 21 and thus to the outlet (opposite to the pressure supply 11) of the relay valve 50.

According to further embodiments the first valve 10 and the second valve 20 may be operated together or independently and can also be formed as a 3/2-valve solenoid (mono-stable or bi-stable) which may provide the same functions as the two solenoids 10, 20 of the embodiments of Fig. 2. The first valve 10 and the second valve 20 are in Fig. 2 mono-stable solenoids. In the non-activated state, they close the connection between the trailer control module port 22 and the parking brake port 21 and to open the connection between the trailer control module port 22 and the pressure supply 11.

The system further comprises first valve unit 41 and a second valve unit 42, wherein the first valve unit 41 is configured to open or close a connection between the pressure supply 11 and a control port 51 of the relay valve 50. The second valve unit 42 is configured to open or close a connection between the control port 51 of the relay valve 50 with the exhaust port 30. The valve units 41, 42 are configured to modulate a pressure at the control port 51 by connecting the control port 51 either to the pressure supply 11 or to the exhaust port 30, thereby increasing/decreasing the pressure value at the control port 51. This operation may be controlled by the control unit 100.

The relay valve 50 is also connected to the exhaust port 30 to enable exhausting the parking brake port 21. The braking system includes further a throttle 13 along a connection between the control port 51 of the relay valve 50 and the connection line 70. In addition, the system includes an emergency release line 12 connected to the control port 51 an enable exhausting the control port 51. Finally, a check valve 13 is provided between the pressure supply 11 and the relay valve 50 to maintain a pressure downstream of the check valve 13.

As described in conjunction with Fig. 1, also the status of this system can be monitored by measuring the pressure by the sensor 60 while the control unit 100 first inflates the trailer control module port 22 (the valves 10, 20 are in the position as shown in Fig. 2) followed by an exhausting by switching the first solenoid 10 and the second solenoid 20 to connect the trailer control module port 22 with the exhaust port 30 (via the relay valve 50). If the pressure behaves as expected (slight increase in the moment of switching the second solenoid 20), no warning needs to be issued. Otherwise, the test can be repeated and/or a warning is issued.

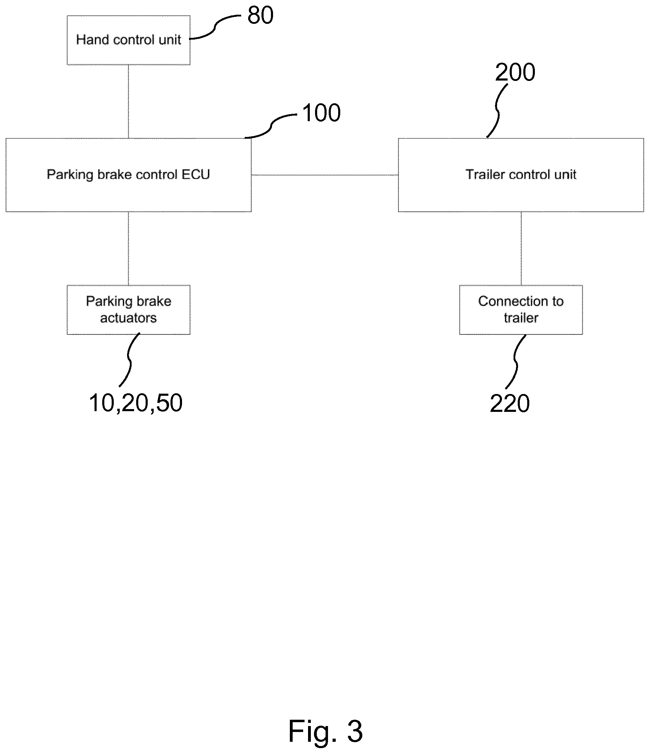

Fig. 3 depicts a system overview of the parking brake system implemented, for example, in a commercial vehicle. The overall system includes the control unit 100 connected to a trailer control unit 200. The parking brake control unit 100 may be configured to be controlled by a hand control unit 80 (e.g. to initiate a parking brake action) and controls in turn the parking brake actuators 10, 20, 50. The trailer control unit 200 is configured to provide connections 220 to the trailer.

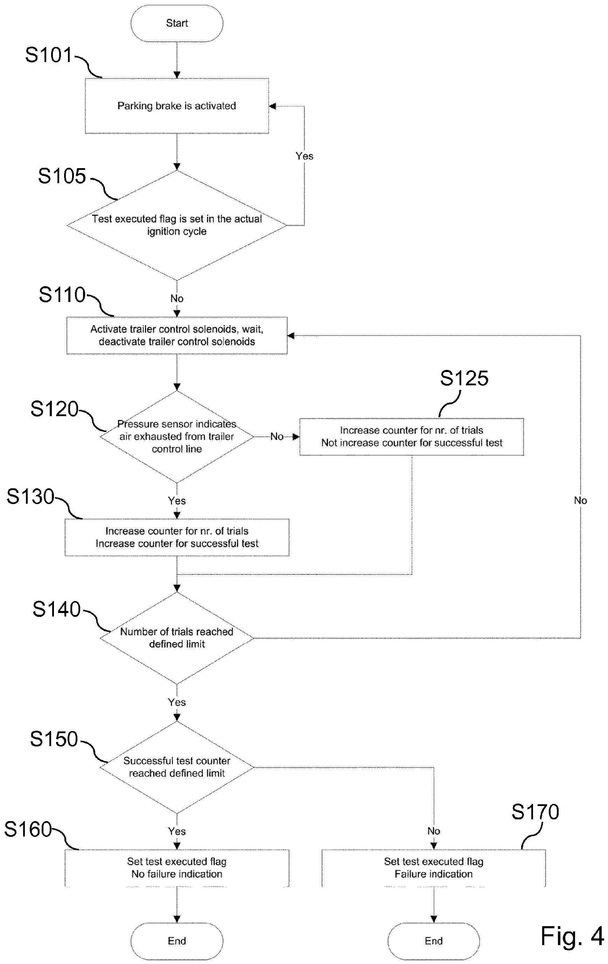

Fig. 4 depicts a flow chart of a method for determining a status of controlling a trailer brake by using a parking brake system. After starting the method activates at step S101 the parking brake. Hence, S101 sets the initial state and the method starts functioning when the parking brake is applied. At step S105, the method tests whether an executed flag is set, for example, in the actual ignition cycle. If this flag is set, the method returns to step S101 and checks if the parking brake is applied. Hence, it is checked (e.g. by the software) whether or not the test has already been executed from the moment the ignition is switched on. If not, the test starts. If yes, no further action is needed in the ignition cycle. If ignition is turned off and on, the test may run again.

Therefore, if this flag is not set, the method continues with step S110 where the valve arrangement 10, 20 is activated (e.g. first and second solenoids exhaust the port 22) and, after waiting for a predetermined time, the valve arrangement 10, 20 is deactivated (e.g. first and second solenoids inflate again the port 22). The method continues with step S120, in which the sensor signals of the pressure sensor 60 are evaluated to detect an indication for a short inflation followed by a deflation of the trailer control line 21. It is understood that this test can be performed in parallel with step S110. If this is the case, i.e. the test succeeds, the method continues with step S130 in which a counter of trials is increased (e.g. a first counter) and a counter of successful test (e.g. a second counter) is increased, too. If the test at step S120 fails, the method continues with step S125, where the first counter is increased, whereas the second counter is not increased. The method continues for both situations with the step S140, where it is checked whether the first counter (number of trials) has reached a defined limit. If not, the method returns to step S110. If so, the method continues with step S150 in which it is tested whether the second counter (number of successful tests) has reached a defined limit. If so, the method ends in step S160 by setting a flag indicating that no failure has occurred. If the test at step S150 fails, the method ends at step S170 by setting a flag indicating one or more failures had occurred.

It is understood that all counters (e.g. the first and second counter counting the number of trials and of successful tests) can be set at any value and that the invention shall not be restricted to particular values. For example, these counters can be set to any of the following values: 1, 2, 3, ..., 5, ... 10, ... 20, ....

This method or part thereof may also be a computer-implemented method. Therefore, embodiments are also intended to cover program storage devices, e.g., digital data storage media, which are machine or computer readable and encode machine-executable or computer-executable programs of instructions, wherein the instructions perform some or all of the acts of the above-described methods, when executed on the computer or processor.

Advantages aspects of embodiments may be summarized as follows:
One aspect relates to a method for determining trailer brake system controllability by parking brake system taking into account the pneumatic layout and properties of these systems using the actuators and sensors installed in or connected to the parking brake control or actuator unit.

Optionally, this method may be characterized in that said controllability determination is implemented by directed operation of actuators installed in or connected to the parking brake system under properly chosen operation circumstances.

This method may further be characterized in that said operation of said actuators causing pressure change in trailer control line which is detected by sensors installed in or connected to the parking brake system.

This method may further be characterized in that said operation of said actuators and said pressure detection is initiated and monitored synchronously providing information about the system behavior which is used for determining controllability of trailer brake system by the parking brake system.

The description and drawings merely illustrate the principles of the invention. It will thus be appreciated that those skilled in the art will be able to devise various arrangements that, although not explicitly described or shown herein, embody the principles of the invention and are included within its scope.

### LIST OF REFERENCE SIGNS

- 11: pressure supply
- 10, 20: valve arrangement (including e.g. a first and second solenoid)
- 12: emergency release line
- 13: check valve
- 15: throttle
- 21: parking brake port
- 22: trailer control module port
- 30: exhaust port
- 41: first valve unit
- 42: second valve unit
- 50: relay valve unit
- 51: control port of the relay valve
- 60: pressure sensor
- 70: connection line
- 80: hand control unit
- 100: control unit of the parking brake system
- 200: trailer control unit
- 220: connection to trailer

## Claims

1. An apparatus for determining a status of controlling a trailer brake by a parking brake system, the parking brake system comprising a parking brake port (21), a trailer control module port (22), a sensor (60) configured to measure a pressure at the parking brake port (21), and a valve arrangement (10, 20) configured to connect or disconnect the trailer control module port (22) and the parking brake port (21) to allow exhausting of the trailer control module port (22) while the parking brake port (21) is exhausted,
**characterized by:**
a control unit (100) configured:
- to control the valve arrangement (10, 20) to exhaust the trailer control module port (22) by connecting the trailer control module port (22) with an exhausted parking brake port (21); and
- to detect a temporary pressure increase sensed by the sensor (60) and, based on a result, to determine the status of controlling as successful or not.

2. The apparatus according to claim 1,
**characterized in that**
the control unit (100) is further configured to repeat exhausting the trailer control module port (22) and the detection of the status to enable a continuous monitoring of a correct functioning of the parking brake system.

3. The apparatus according to claim 1 or claim 2,
**characterized in that**
the control unit (100) is further configured to detect the status by comparing pressure values from the sensor (60) with at least one threshold value and to provide a warning if at least one of the threshold values will not be exceeded.

4. The apparatus according to one of the preceding claims,
**characterized in that**
the control unit (100) is further configured:
to control the valve arrangement (10, 20) to inflate the trailer control module port (22) and,
after a predetermined time, to exhaust the trailer control module port (22) while detecting the status of controlling by monitoring pressure values sensed by the pressure sensor (60).

5. The apparatus according to one of the preceding claims,
**characterized in that**
the control unit (100) is further configured:
to perform the steps of inflating the trailer control module port (22) followed by exhausting the trailer control module port (22) and of detecting the status for multiples trials while counting a number trials and a number of successful tests.

6. The apparatus according to claim 5,
**characterized in that**
the control unit (100) is further configured:
to provide an indication of no failure for the parking brake system, if the number of trials has reached a defined limit and if a predetermined number of trials were successful;
otherwise, if a certain number of tests indicate a failure, to issue a failure indication.

7. The apparatus according to one of the preceding claims,
**characterized in that**
the control unit (100) is further configured
to check whether an execution flag is set in an actual ignition cycle, and
to executes the control of the valve arrangement (10, 20) and the detection of the status only when no execution flag is set.

8. A parking brake system
**characterized by**
an apparatus according to one of the preceding claims.

9. A vehicle, in particular a commercial vehicle, with a parking brake system according to claim 8.

10. A method for determining a status of controlling a trailer brake by a parking brake system, the parking brake system comprising a parking brake port (21), a trailer control module port (22), a sensor (60) configured to measure a pressure at the parking brake port (21), and a valve arrangement (10, 20) configured to connect or disconnect the trailer control module port (22) and the parking brake port (21) to allow exhausting of the trailer control module port (22) while the parking brake port (21) is exhausted, **characterized by:**
controlling the valve arrangement (10, 20) to exhaust the trailer control module port (22) by connecting the trailer control module port (22) with an exhausted parking brake port (21);
detecting a temporary pressure increase sensed by the sensor (60); and
based on a detection result, determining the status of controlling as successful or not.

## Patentansprüche

1. Einrichtung zum Bestimmen eines Status eines Steuerns einer Anhängerbremse durch ein Feststellbremsensystem, wobei das Feststellbremsensystem einen Feststellbremsenanschluss (21), einen Anhängersteuermodulanschluss (22), einen Sensor (60), der dazu ausgelegt ist, einen Druck an dem Feststellbremsenanschluss (21) zu messen, und eine Ventilanordnung (10, 20), die dazu ausgelegt ist, den Anhängersteuermodulanschluss (22) und den Feststellbremsenanschluss (21) zu verbinden oder zu trennen, um ein Entleeren des Anhängersteuermodulanschlusses (22) zu ermöglichen, während der Feststellbremsenanschluss (21) entleert ist, umfasst,
**gekennzeichnet durch:**
eine Steuereinheit (100), die zu Folgendem ausgestaltet ist:
- die Ventilanordnung (10, 20) zu steuern, um den Anhängersteuermodulanschluss (22) durch Verbinden des Anhängersteuermodulanschlusses (22) mit einem entleerten Feststellbremsenanschluss (21) zu entleeren; und
- eine durch den Sensor (60) erfasste temporäre Druckerhöhung zu detektieren und, basierend auf einem Ergebnis, den Status eines Steuerns als erfolgreich oder nicht zu bestimmen.

2. Einrichtung nach Anspruch 1,
**dadurch gekennzeichnet, dass**
die Steuereinheit (100) ferner dazu ausgelegt ist, das Entleeren des Anhängersteuermodulanschlusses (22) und die Detektion des Status zu wiederholen, um ein fortlaufendes Überwachen eines korrekten Funktionierens des Feststellbremsensystems zu ermöglichen.

3. Einrichtung nach Anspruch 1 oder Anspruch 2, **dadurch gekennzeichnet, dass**
die Steuereinheit (100) ferner dazu ausgelegt ist, den Status durch Vergleichen von Druckwerten von dem Sensor (60) mit mindestens einem Schwellenwert zu detektieren und eine Warnung bereitzustellen, wenn mindestens einer der Schwellenwerte nicht überschritten wird.

4. Einrichtung nach einem der vorhergehenden Ansprüche, **dadurch gekennzeichnet, dass**
die Steuereinheit (100) ferner zu Folgendem ausgelegt ist:
die Ventilanordnung (10, 20) zu steuern, um den Anhängersteuermodulanschluss (22) zu füllen, und,
nach einer vorbestimmten Zeit den Anhängersteuermodulanschluss (22) zu entleeren, während der Status eines Steuerns durch Überwachen von durch den Drucksensor (60) erfassten Druckwerten detektiert wird.

5. Einrichtung nach einem der vorhergehenden Ansprüche, **dadurch gekennzeichnet, dass**
die Steuereinheit (100) ferner zu Folgendem ausgelegt ist:
die Schritte zum Füllen des Anhängersteuermodulanschlusses (22) gefolgt von einem Entleeren des Anhängersteuermodulanschlusses (22) und zum Detektieren des Status für mehrere Versuche während eines Zählens einer Anzahl von Versuchen und einer Anzahl von erfolgreichen Tests durchzuführen.

6. Einrichtung nach Anspruch 5,
**dadurch gekennzeichnet, dass**
die Steuereinheit (100) ferner zu Folgendem ausgelegt ist:
eine Anzeige von keiner Störung für das Feststellbremsensystem bereitzustellen, wenn die Anzahl von Versuchen eine definierte Grenze erreicht hat und wenn eine vorbestimmte Anzahl von Versuchen erfolgreich war;
andernfalls, wenn eine gewisse Anzahl von Tests eine Störung anzeigen, eine Störungsanzeige auszugeben.

7. Einrichtung nach einem der vorhergehenden Ansprüche, **dadurch gekennzeichnet, dass**
die Steuereinheit (100) ferner zu Folgendem ausgelegt ist
zu prüfen, ob ein Ausführungsflag in einem tatsächlichen Zündzyklus festgelegt ist, und
die Steuerung der Ventilanordnung (10, 20) und die Detektion des Status nur auszuführen, wenn kein Ausführungsflag festgelegt ist.

8. Feststellbremsensystem,
**gekennzeichnet durch**
eine Einrichtung nach einem der vorhergehenden Ansprüche.

9. Fahrzeug, insbesondere ein Nutzfahrzeug, mit einem Feststellbremsensystem nach Anspruch 8.

10. Verfahren zum Bestimmen eines Status eines Steuerns einer Anhängerbremse durch ein Feststellbremsensystem, wobei das Feststellbremsensystem einen Feststellbremsenanschluss (21), einen Anhängersteuermodulanschluss (22), einen Sensor (60), der dazu ausgelegt ist, einen Druck an dem Feststellbremsenanschluss (21) zu messen, und eine Ventilanordnung (10, 20), die dazu ausgelegt ist, den Anhängersteuermodulanschluss (22) und den Feststellbremsenanschluss (21) zu verbinden und zu trennen, um ein Entleeren des Anhängersteuermodulanschlusses (22) zu ermöglichen, während der Feststellbremsenanschluss (21) entleert ist, umfasst,
**gekennzeichnet durch:**
Steuern der Ventilanordnung (10, 20), um den Anhängersteuermodulanschluss (22) durch Verbinden des Anhängersteuermodulanschlusses (22) mit einem entleerten Feststellbremsenanschluss (21) zu entleeren;
Detektieren einer durch den Sensor (60) erfassten temporären Druckerhöhung; und,
basierend auf einem Detektionsergebnis, Bestimmen des Status eines Steuerns als erfolgreich oder nicht.

## Revendications

1. Installation de détermination d'un état de commande d'un frein de remorque par un système de frein de stationnement, le système de frein de stationnement comprenant un orifice (21) de frein de stationnement, un orifice (22) de module de commande de remorque, un capteur (60) configuré pour mesurer une pression à l'orifice (21) de frein de stationnement et un agencement (10, 20) de soupape configuré pour mettre en communication ou mettre hors de communication l'orifice (22) de module de commande de remorque et l'orifice (21) de frein de stationnement, afin de permettre d'évacuer l'orifice (22) de module de commande de remorque alors que l'orifice (21) de frein de stationnement est évacué,
**caractérisée par :**
une unité (100) de commande configurée :
- pour commander l'agencement (10, 20) de soupape pour évacuer l'orifice (22) de module de commande de remorque en mettant l'orifice (22) de module de commande de remorque en communication avec un orifice (21) de frein de stationnement évacué ; et
- pour détecter une augmentation temporaire de pression détectée par le capteur (60) et, sur la base d'un résultat, pour déterminer l'état de commande comme couronné de succès ou non.

2. Installation suivant la revendication 1,
**caractérisée en ce que**
l'unité (100) de commande est configurée en outre pour répéter l'évacuation de l'orifice (22) de module de commande de remorque et la détection de l'état pour permettre un contrôle continu d'un fonctionnement correct du système de frein de stationnement.

3. Installation suivant la revendication 1 ou la revendication 2,
**caractérisée en ce que**
l'unité (100) de commande est configurée en outre pour détecter l'état en comparant des valeurs de pression provenant du capteur (60) à au moins une valeur de seuil pour fournir un avertissement, si au moins l'une des valeurs de seuil ne sera pas dépassée.

4. Installation suivant l'une des revendications précédentes, **caractérisée en ce que**
l'unité (100) de commande est configurée en outre :
pour commander l'agencement (10, 20) de soupape pour alimenter l'orifice (22) de module de commande de remorque et,
après un temps déterminé à l'avance, pour évacuer l'orifice (22) de module de commande de remorque alors que l'on détecte l'état de commande en contrôlant des valeurs de pression détectées par le capteur (60) de pression.

5. Installation suivant l'une des revendications précédentes, **caractérisée en ce que**
l'unité (100) de commande est configurée en outre :
pour effectuer les stades de l'alimentation de l'orifice (22) de module de commande de remorque suivis de l'évacuation de l'orifice (22) de module de commande de remorque et de détection de l'état pendant de multiples essais tout en comptant le nombre d'essais et le nombre de tests couronnés de succès.

6. Installation suivant la revendication 5,
**caractérisée en ce que**
l'unité (100) de commande est configurée en outre :
pour fournir une indication de non défaillance du système de frein de stationnement si le nombre d'essais atteint une limite définie et si un nombre déterminé à l'avance d'essais ont été couronnés de succès ;
sinon, si un certain nombre de tests indiquent une défaillance, pour émettre une indication de défaillance.

7. Installation suivant l'une des revendications précédentes, **caractérisée en ce que**
l'unité (100) de commande est configurée en outre :
pour vérifier si un drapeau d'exécution est mis dans un cycle d'allumage en cours, et
pour exécuter la commande de l'agencement (10, 20) de soupape et la détection de l'état seulement lorsqu'un drapeau d'exécution n'est pas mis.

8. Système de frein de stationnement
**caractérisé par**
une installation suivant l'une des revendications précédentes.

9. Véhicule, en particulier véhicule utilitaire, ayant un système de frein de stationnement suivant la revendication 8.

10. Procédé de détermination de l'état de commande d'un frein de remorque par un système de frein de stationnement, le système de frein de stationnement comprenant un orifice (21) de frein de stationnement, un orifice (22) de module de commande de remorque, un capteur (60) configuré pour mesurer une pression à l'orifice (21) de frein de stationnement et un agencement (10, 20) de soupape configuré pour mettre en communication ou mettre hors de communication l'orifice (22) de module de commande de remorque et l'orifice (21) de frein de stationnement, afin de permettre d'évacuer l'orifice (22) de module de commande de remorque alors que l'orifice (21) de frein de stationnement est évacué,
**caractérisé en ce que** :
on commande l'agencement (10, 20) de soupape pour évacuer l'orifice (22) de module de commande de remorque en mettant l'orifice (22) de module de commande de remorque en communication avec un orifice (21) de frein de stationnement évacué ;
on détecte une augmentation temporaire de pression détectée par le capteur (60) ; et
sur la base d'un résultat de la détection, on détermine l'état de commande comme couronné de succès ou non.
